# EUROPEAN PATENT APPLICATION

(11) **EP 2 042 416 A1**
(43) Date of publication of application: **01.04.2009**
(21) Application number: 08005621.1
(22) Date of filing: 26.03.2008
(51) Int. Cl.: B62J 99/00

(54) **Bicycle control system**

(30) Priority: 28.09.2007 US 863378
(71) Applicant: SHIMANO INC., Sakai-ku Sakai-City Osaka 590-8577 (JP)
(72) Inventor: Takebayashi, Haruyuki, Sakai-City Osaka-590-8577 (JP)
(74) Representative: Hofmann, Harald

(57) **Abstract**

A bicycle control system is provided with a sensed element, a sensor and a cycle computer. The sensed element is mounted to a first part of a bicycle. The sensor is mounted to a second part of the bicycle at a location to selectively detect the sensed element and send an output signal as the sensor detects the sensed element. The cycle computer is mounted to a part of bicycle with the cycle computer including a receiver arranged to receive the output signal from the sensor. The sensor includes a sensing element that outputs a detection signal upon detecting the sensed element, a processing unit that calculates relative behavior between the first and second parts based on a time interval of the detection signal from the sensing element, and a transmitter that transmits the output signal to the cycle computer based a calculation result of the processing unit.

## Description

### Field of the Invention

This invention generally relates to a bicycle control system that detects at least one bicycle parameter. More specifically, the present invention relates to a bicycle control system, which conducts interval communications between a sensor that detects a bicycle parameter and a cycle computer that receives the bicycle parameter. Background Information

Bicycling is becoming an increasingly more popular form of recreation as well as a means of transportation. Moreover, bicycling has become a very popular competitive sport for both amateurs and professionals. Whether the bicycle is used for recreation, transportation or competition, the bicycle industry is constantly improving the various components of the bicycle.

Recently, bicycles have been equipped with electrical components to make riding easier and more enjoyable for the rider. Some bicycles are equipped with automatic shifting units that are automatically adjusted according to the riding conditions that are determined by a cycle computer or control unit. In particular, the front and rear derailleurs have recently been automated. Moreover, various electronic devices have been used to determine one or more operating parameters for controlling the derailleurs and providing information to the rider. Thus, the cycle computer or control unit of the bicycle not only provides information to the rider, but is also used in controlling various components of the bicycle. Thus, it is desirable for the data provided by the cycle computer or control unit to the rider and/or the other bicycle components to be accurate as possible.

In a conventional bicycle control system, the bicycle is provided with a plurality of sensors (speed sensor, cadence sensor, etc.) and a cycle computer. The sensors (speed sensor, cadence sensor, etc.) are connected to the bicycle at various stationary locations such as on a front fork, a chain stay, a seat tube, etc. The cycle computer is typically mounted on the bicycle handlebar. The bicycle cycle computer displays various kinds of information regarding the speed, the pedal revolution per minute (rpm), the gear in operation, the pulse of the rider, the ambient temperature, the geographical height and the like. Typically, wires are used to connect each of the sensors to the cycle computer. In the case of a speed sensor on the front fork, the wire needs to be routed up the fork, past the front brake device and along the frame to the cycle computer that is mounted on the handlebar.

More recently, some bicycle control system use wireless communications between the cycle computer and the sensors. Thus, the cycle computer and the sensors communicate each other by a wireless communications (radio communication, or infrared communication). One drawback to using wireless communications is that sometimes the signals between the cycle computer and the sensors are lost or weak such that the signals are inaccurately interpreted by the cycle computer. For example, a speed sensor is fixedly attached to a bicycle frame member at a location to detect rotational behavior of a bicycle wheel by sensing a magnet attached to a part of the wheel. The conventional sensor includes a reed switch creates pulses that are sent to the cycle computer via wireless communications. Thus, in this conventional wireless control system, the speed sensor intermittently sends a pulse signal, when the sensor detects the magnet. If the wheel rotates faster, the sensor sends the signal with "short" interval time between pulses. On the other hand, if the wheel rotates slower, the sensor sends the signal with "long" interval time between pulses. When, the cycle computer receives the pulse signal, the cycle computer calculates a rotational speed based on the interval time and the tire size. In this conventional system, if the cycle computer misses one of the pulse signals for some reason (e.g., signal interference), then cycle computer cannot calculate the rotational speed correctly. Thus, in wireless and wired bicycle control systems it is desirable to have accurate calculates from the sensors (speed sensor, cadence sensor, etc.).

In view of the above, it will be apparent to those skilled in the art from this disclosure that there exists a need for an improved bicycle control system. This invention addresses this need in the art as well as other needs, which will become apparent to those skilled in the art from this disclosure.

### SUMMARY OF THE INVENTION

One object of the present invention is to provide a bicycle control system that minimizes the likelihood of an inaccurate calculation from a bicycle parameter that is being measured.

The foregoing object can basically be attained by providing a bicycle control system that comprises a sensed element, a sensor and a cycle computer. The sensed element is configured to be mounted to a first part of a bicycle. The sensor is configured to be mounted to a second part of the bicycle at a location to selectively detect the sensed element and send an output signal as the sensor detects the sensed element. The cycle computer is configured to be mounted to a part of bicycle with the cycle computer including a receiver arranged to receive the output signal from the sensor. The sensor includes a sensing element that outputs a detection signal upon detecting the sensed element, a processing unit that calculates relative behavior between the first and second parts based on a time interval of the detection signal from the sensing element, and a transmitter that transmits the output signal to the cycle computer based a calculation result of the processing unit.

These and other objects, features, aspects and advantages of the present invention will become apparent to those skilled in the art from the following detailed description, which, taken in conjunction with the annexed drawings, discloses a preferred embodiment of the present invention.

### BRIEF DESCRIPTION OF THE DRAWINGS

Referring now to the attached drawings which form a part of this original disclosure:

Figure 1 is a side elevational view of a bicycle equipped with a bicycle control system that includes a cycle computer, a pair of sensors and a pair of sensed elements (magnets) in accordance with one preferred embodiment;

Figure 2 is a top perspective view of the handlebar portion of the bicycle showing the cycle computer in accordance with the illustrated embodiment;

Figure 3 is an elevational view of the speed sensor attached to a frame member (i.e., the front fork) and one of the sensed elements (magnet) attached one of the spokes of the front wheel in accordance with the illustrated embodiment;

Figure 4 is an perspective view of the cadence sensor attached to a frame member (i.e., the down tube) and one of the sensed elements (magnet) attached one of the crank arms in accordance with the illustrated embodiment;

Figure 5 is a simplified schematic view of the two way wireless communications between the cycle computer and the sensors in accordance with the illustrated embodiment; and

Figure 6 is a timing chart indicating the correlation between a signal input received by the sensor, transmission of the wheel rotation period by the sensor and reception of the wheel rotation period by the cycle computer.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

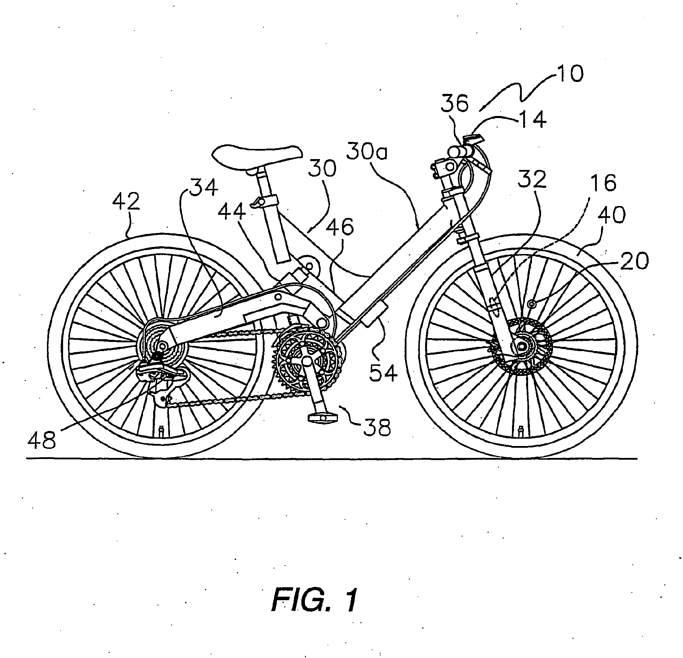

Referring initially to Figure 1, a bicycle 10 is illustrated that is equipped with a bicycle control system 12 that basically includes a cycle computer 14, a wheel rotation or speed sensor 16, a crank rotation or cadence sensor 18 and a pair of sensed elements (magnets) 20 and 22 in accordance with one embodiment of the present invention. In the illustrated embodiment, the bicycle control system 12 conducts interval wireless communications between the sensors 16 and 18 that detect bicycle traveling data and the cycle computer 14 that receives calculations based on the bicycle traveling data. Specifically, in the bicycle control system 12, a calculation is preferably conducted at the sensors 16 and 18 and the calculation is sent to the cycle computer 14. In this way, the bicycle control system 12 is configured so that, in the event of a communication outage, the cycle computer 14 can properly interpret the traveling data from the sensors 16 and 18. However, in its broadest terms, the present invention can also be implemented in wired systems, which are subject to a communication signal being dropped, lost or otherwise inaccurate signals being received by a cycle computer.

The bicycle 10 basically includes, among other components, a main frame 30, a front suspension fork 32 pivotally mounted to the main frame 30, a rear suspension arm 34 pivotally mounted to the main frame 30, a handlebar unit 36 fastened to the front suspension fork 32, a drive train 38, a front wheel 40 mounted to the front fork 32 and a rear wheel 42 mounted to the rear suspension arm 34. A shock absorber 44 is operatively mounted between the main frame 30 and the rear suspension arm 34.

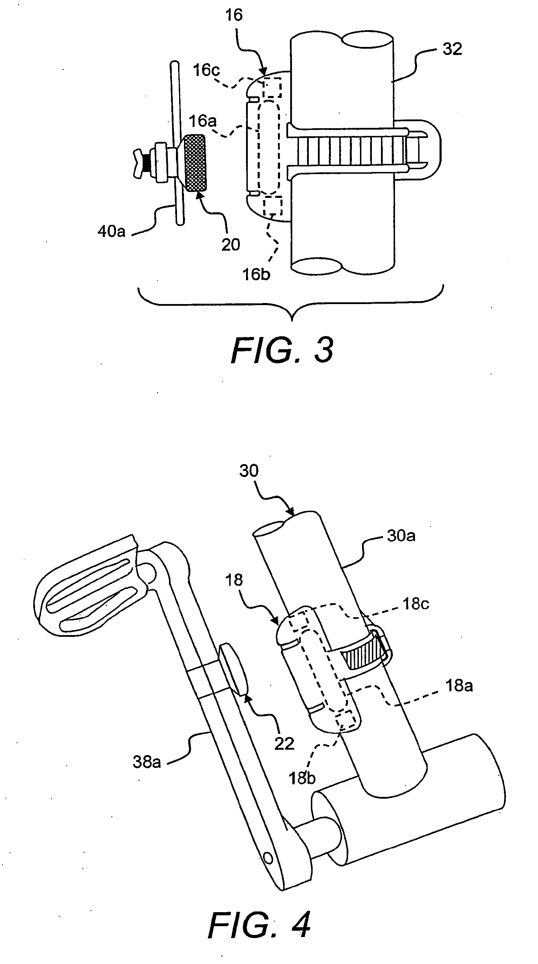

As seen in Figure 3, in the illustrated embodiment, the wheel rotation or speed sensor 16 is mounted to the front suspension fork 32, while the sensed element (magnet) 20 is mounted to a spoke 40a of the front wheel 40. The spoke 40a of the front wheel 40 constitutes a first rotating part of the bicycle 10. The front suspension fork 32 constitutes a second non-rotating part of the bicycle 10. As seen in Figure 4, in the illustrated embodiment, the crank rotation or cadence sensor 18 is mounted to a down tube 30a of the main frame 30, while the sensed element (magnet) 22 is mounted to a left crank arm 38a of the drive train 38. The left crank arm 38a of the drive train 38 constitutes a first rotating part of the bicycle 10. The down tube 30a of the main frame 30 constitutes a second non-rotating part of the bicycle 10. As will be apparent from this disclosure the front suspension fork 32 and the down tube 30a constitute bicycle frame members of the bicycle 10.

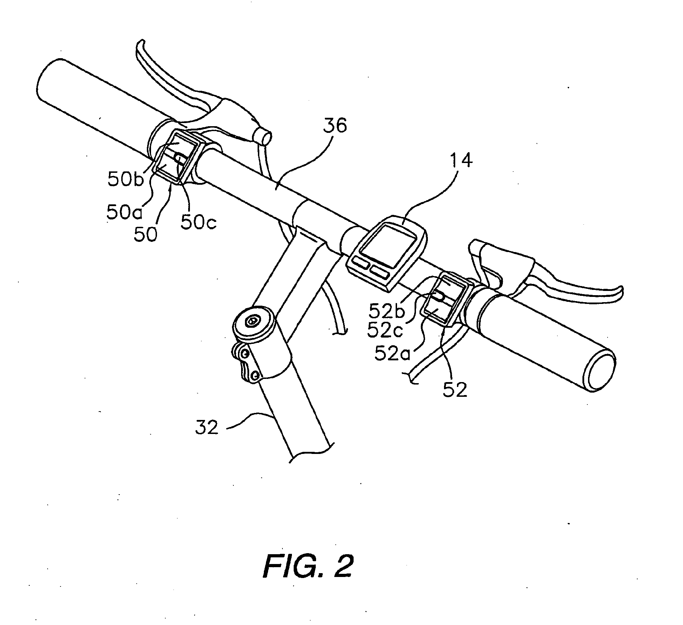

The drive train 38 is preferably equipped with front and rear electrically powered derailleurs 46 and 48 that are operated by the electrical switch units 50 and 52 (see Figure 2), respectively, via the cycle computer 14. The electrical switch units 50 and 52 are also used to control the stiffnesses of the front suspension fork 32 and the shock absorber 44, respectively, via the cycle computer 14. In the illustrated embodiment, the cycle computer 14 conducts two-way wireless communications with the front and rear electrically powered derailleurs 46 and 48 and the electrical switch units 50 and 52. Preferably, a battery and/or one of the front wheels 40 and 42 is provided with a hub dynamo that serve as a power source for the electrical components. As seen in Figure 1, a battery 54 is mounted to the downwardly facing surface of the down tube 30a the main frame 30 and electrically coupled to the electrically powered derailleurs 46 and 48. The cycle computer 14 preferably has a built in battery. Likewise, preferably, each of the sensors 16 and 18 and each of the electrical switch units 50 and 52 has its own built in battery.

The electrical switch unit 50 has a pair of front gearshift switches 50a and 50b, which perform a manual gear-shifting operation of the front electrically powered derailleur 46 and a suspension mode switch 50c, which changes the stiffness of the front suspension fork 32 between hard and soft. The gearshift switch 50a is a switch for shifting the front electrically powered derailleur 46 incrementally downward when a manual gearshift mode has been enabled. The gearshift switch 50b is used for incrementally shifting the front electrically powered derailleur 46 upward.

The electrical switch unit 52 has a pair of rear gearshift switches 52a and 52b, which perform a manual gear-shifting operation of the rear electrically powered derailleur 48 and a shift mode switch 52c, switches the shift operation mode between automatic and manual gear-shifting modes. The gearshift switch 52a is a switch for shifting the rear electrically powered derailleur 48 incrementally downward when a manual gearshift mode has been enabled. The gearshift switch 52b is used for incrementally shifting the rear electrically powered derailleur 48 upward.

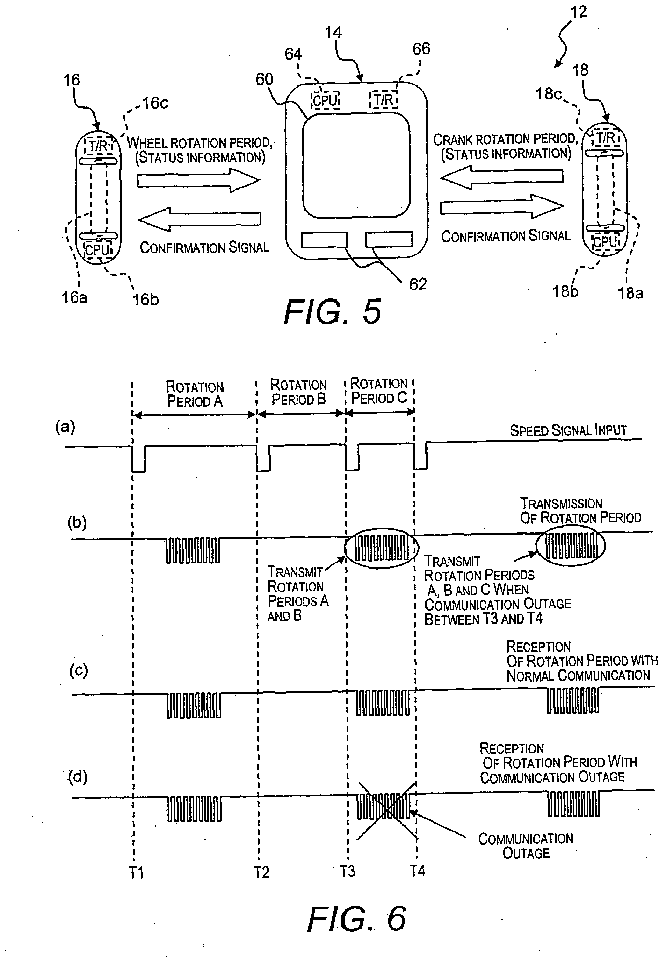

As best seen in Figure 5, the cycle computer 14 basically includes an LCD display 60, a pair of input buttons 62, a microcomputer 64 and a two way wireless communication device 66. The microcomputer 64 is a conventional device with various control programs such as shifting control programs and display programs. The microcomputer 64 includes, among other things a central processing unit CPU, an I/O interface and memory (RAM and ROM). The internal RAM of the microcomputer 64 stores statuses of operational flags and various control data. The two way wireless communication device 66 is a conventional device that includes a transmitter and a receiver, which are indicated as T/R in Figure 5. The two way wireless communication device 66 wirelessly communications with the sensors 16 and 18, the front and rear electrically powered derailleurs 46 and 48 and the electrical switch units 50 and 52. The communication protocol (communication timings, communication data format and communication data contents) can be any conventional communication protocol or can be a specialized communication protocol as needed and/or desired.

Still referring to Figure 5, the cycle computer 14 is operatively coupled to the wheel rotation or speed sensor 16 that senses the sensed elements (magnet) 20 via wireless communications. The cycle computer 14 is operatively coupled to the crank rotation or cadence sensor 18 that senses the sensed elements (magnet) 22 via wireless communications. From the signals of the sensors 16 and 18 and other prestored information (e.g., wheel circumference), the cycle computer 14 can calculate and selectively display the bicycle speed, the distance traveled, the current time, cadence, average cadence and/or the like on the display 60. The cycle computer 14 preferably includes front and rear automatic shifting programs that are activated by depressing the shift mode switch 52c on the electrical switch unit 52. Thus, the cycle computer 14 uses the signals from the sensors 16 and 18 to control the shifting of the front and rear electrically powered derailleurs 46 and 48. Also the stiffness of the front suspension fork 32 and the shock absorber 44 can also be automatically adjusted based on the signals from the sensors 16 and 18.

As best seen in Figures 3 and 5, the wheel rotation or speed sensor 16 basically includes a sensing element 16a, a central processing unit 16b and a transmitter/receiver 16c. The speed sensor 16 is configured to be mounted to a part of the bicycle at a location to selectively detect the sensed element 20 via the sensing element 16a and then send an output signal to the cycle computer 14 via the transmitter/receiver 16c as the sensed element 20 of the speed sensor 16 detects the sensed element 20. In the illustrated embodiment, the sensed element 20 is mounted to the spoke 40a (e.g., a first part) of the front wheel 40 and the sensing element 16a is mounted to the front suspension fork 32 (e.g., a second part) as seen in Figure 3. Thus, preferably, the sensed element 20 is mounted to a part of a wheel and the sensing element 16a is mounted to a frame member. Depending on the bicycle configuration and other design parameters, the sensing element 16a can be alternatively mounted to the rear suspension arm 34 or a chain stay and the sensed element 20 can be mounted to the rear wheel 42. In any event, one of the elements 16a and 20 is mounted to a rotating part of the bicycle 10 and the other of the elements 16a and 20 is mounted to a non-rotating part of the bicycle 10 so as to sense bicycle speed.

The sensing element 16a outputs a detection signal upon detecting the sensed element 20, i.e., once per wheel rotation. In the illustrated embodiment, the sensing element 16a is a reed switch that opens and closes base on the proximity of the sensed element 20, which is a magnet in the illustrated embodiment. Each time the sensed element 20 comes within a prescribed area of the sensing element 16a a pulse or detection signal is produced that is sent to the central processing unit 16b for processing. Of course, it will be apparent from this disclosure that this sensing arrangement can be accomplished in ways other than with a reed switch and a magnet.

The central processing unit 16b receives the pulse or detection signal from the sensing element 16a and calculates a wheel rotation period in response to the detection signal from the sensing element 16a of the sensor 16 when the spoke 40a (e.g., a first part) of the front wheel 40 and the front suspension fork 32 (e.g., a second part) come in proximity of each other. Thus, the central processing unit 16b calculates relative behavior between the first and second parts (e.g., the spoke 40a of the front wheel 40 and the front suspension fork 32) based on a time interval of the detection signal from the sensing element 16a. Once the central processing unit 16b calculates the wheel rotation period, the wheel rotation period is sent the transmitter/receiver 16c for transmitting the wheel rotation period to the cycle computer 14 as an output signal. In other words, the transmitter/receiver 16c has a transmitter that transmits the output signal to the cycle computer 14 based a calculation result of the processing unit 16b at each transmitting interval. The cycle computer 14 can then accurately calculate and display bicycle speed, travel distance and average speed in response to receiving the wheel rotation period.

Referring to Figures 4 and 5, the crank rotation or cadence sensor 18 basically includes a sensing element 18a, a central processing unit 18b and a transmitter/receiver 18c. The cadence sensor 18 is configured to be mounted to a part of the bicycle at a location to selectively detect the sensed element 22 via the sensing element 18a and then send an output signal to the cycle computer 14 via the transmitter/receiver 18c as the sensed element 22 of the cadence sensor 18 detects the sensed element 22. In the illustrated embodiment, the sensed element 22 is mounted to the crank arm 38a (e.g., a first part) of the drive train 38 and the sensing element 18a is mounted to the down tube 30a (e.g., a second part) of the main frame 30 as seen in Figure 4. Thus, preferably, the sensed element 22 is mounted to a part of the drive train 38 and the sensing element 18a is mounted to a frame member (e.g., a down tube 30a) of the main frame 30. Depending on the bicycle configuration and other design parameters, the sensing element 18a can be alternatively mounted to other frame members such as a seat tube or a chain stay. In any event, one of the elements 18a and 22 is mounted to a rotating part of the bicycle 10 and the other of the elements 18a and 22 is mounted to a non-rotating part of the bicycle 10 so as to sense pedaling cadence.

The sensing element 18a outputs a detection signal upon detecting the sensed element 22, i.e., once per crank rotation. In the illustrated embodiment, the sensing element 18a is a reed switch that opens and closes base on the proximity of the sensed element 22, which is a magnet in the illustrated embodiment. Each time the sensed element 22 comes within a prescribed area of the sensing element 18a a pulse or detection signal is produced that is sent to the central processing unit 18b for processing. Of course, it will be apparent from this disclosure that this sensing arrangement can be accomplished in ways other than with a reed switch and a magnet.

The central processing unit 18b receives the pulse or detection signal from the sensing element 18a and calculates a crank rotation period in response to the detection signal from the sensing element 18a of the cadence sensor 18 when the crank arm 38a (e.g., a first part) and the down tube 30a (e.g., a second part) of the main frame 30 come in proximity of each other. Thus, the central processing unit 18b calculates relative behavior between the first and second parts (e.g., the crank arm 38a and the down tube 30a) based on a time interval of the detection signal from the sensing element 18a. Once the central processing unit 18b calculates the crank rotation period, the crank rotation period is sent the transmitter/receiver 18c for transmitting the crank rotation period to the cycle computer 14 as an output signal. In other words, the transmitter/receiver 18c has a transmitter that transmits the output signal to the cycle computer 14 based a calculation result of the processing unit 18b at each transmitting interval. The cycle computer 14 can then accurately calculate and display cadence and/or average cadence in response to receiving the crank rotation period.

Turning now to Figure 5, a timing chart is illustrated to show a correlation between some of the various communications occurring in the bicycle control system 12. While, in the illustrated embodiment, the transmitter/receivers 16c and 18c of the sensors 16 and 18 are configured to transmit the output signals wirelessly and the cycle computer 14 is configured to receive the output signals from the transmitter/receivers 16c and 18c of the sensors 16 and 18 wirelessly, the timing chart of Figure 5 can also be applied to wired communications between the cycle computer 14 and the sensors 16 and 18.

Transmission line (a) shows a speed input or detection signal in which a pulse signal is generated each time the sensed element 20 on the spoke 40a (e.g., a first part) passes the sensing element 16a on the front suspension fork 32 ( e.g., a second part). In the timing chart, pulse signals are generated at times T1, T2, T3 and T4. In other words, the time between the pulse signals represent a wheel rotation period. The elements 18a and 22 cooperate in the same manner for sensing a crank rotation period.

Transmission line (b) shows an output signal from the transmitter/receiver 16c in which the transmitter/receiver 16c of the speed sensor 16 periodically sends the wheel rotation period calculated by the central processing unit 16b at a prescribed time interval to the cycle computer 14. In other words, the central processing unit 16b of the speed sensor 16 periodically calculates the wheel rotation period based on the detection signal of the sensing element 16a and the transmitter/receiver 16c of the speed sensor 16 then sends the calculated wheel rotation period to the cycle computer 14. Similarly, the transmitter/receiver 18c of the cadence sensor 18 periodically sends the crank rotation period calculated by the central processing unit 18b at a prescribed time interval to the cycle computer 14.

Transmission line (c) shows the two way wireless communication device 66 of the cycle computer 14 receiving the output signal from the transmitter/receiver 16c during normal uninterrupted communications. When the cycle computer 14 receives the output signal from the transmitter/receiver 16c of the speed sensor 16, the microcomputer 64 (i.e., the CPU) of the cycle computer 14 calculates periodically sends the wheel rotation period calculated by the central processing unit 16b at a prescribed time interval to the cycle computer 14. In other words, the central processing unit 16b of the speed sensor 16 periodically calculates and selectively displays bicycle speed, travel time, travel distance, average speed and the like based the calculation of the wheel rotation period by the central processing unit 16b of the speed sensor 16. Similarly, the two way wireless communication device 66 of the cycle computer 14 receives the output signal from the transmitter/receiver 18c of the cadence sensor 18 to periodically calculate and selectively display cadence, average cadence and the like based the calculation of the crank rotation period by the central processing unit 18b of the cadence sensor 16.

Transmission line (d) shows a case in which a communication outage occurs between the two way wireless communication device 66 of the cycle computer 14 and the transmitter/receiver 16c during the time interval between times T3 and T4. With a conventional traveling data communication system using an intermittent communication, the traveling data can not be detected in real time by a receiver of the cycle computer. Therefore, if a communication outage occurs, an integrated error of the traveling data is increased. However, with the bicycle control system 12 a traveling data communication system is provided in which the integrated error can be avoided even if the communication outage happens. In particular, the speed sensor 16 measures status information such as a wheel rotation period and wheel revolutions. Then, the speed sensor transmits the status information to the cycle computer 14 at prescribed time intervals (transmission interval timings). With this method, the time interval of the intermittent communication or transmission can be set to a fixed value. The cycle computer 14 transmits only a confirmation signal back to the sensor 16. This confirmation signal can be used by the sensor 16 to determine whether to retransmit the prior signal or the incorporate the prior data of the missed signal into the next scheduled transmission. Alternatively, if the prior missing data is not retransmitted then the cycle computer 14 merely does note recalculate during the period of the communication outage. Rather, the cycle computer 14 can continue to display the data received before the communication outage or indicate the existence of the communication outage (e.g., displar "err"). The cycle computer 14 measures a traveling time. Thus, the cycle computer 14 calculates the speed, the travel distance and an average speed with using the prestored wheel circumferential length and the traveling time. The speed is basically calculated by dividing the wheel circumferential length by the wheel rotation period. The travel distance is basically calculated by multiplying the wheel circumferential length by the wheel revolutions, which can be attained from the wheel rotation period data and the interval time of the pulse signal. Alternatively, the central processing unit 16b on the speed sensor 16 can calculate the wheel revolutions so that both the wheel rotation period and the wheel revolutions sent from the speed sensor 16 to the cycle computer 14. The average speed is basically calculated by dividing the travel distance by the travel time.

### GENERAL INTERPRETATION OF TERMS

In understanding the scope of the present invention, the term "configured" as used herein to describe a component, section or part of a device includes hardware and/or software that is constructed and/or programmed to carry out the desired function. In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts. As used herein to describe the present invention, the following directional terms "forward, rearward, above, downward, vertical, horizontal, below and transverse" as well as any other similar directional terms refer to those directions of a bicycle equipped with the present invention. Accordingly, these terms, as utilized to describe the present invention should be interpreted relative to a bicycle equipped with the present invention as used in the normal riding position. Finally, terms of degree such as "substantially", "about" and "approximately" as used herein mean a reasonable amount of deviation of the modified term such that the end result is not significantly changed.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims and their equivalents.

## Claims

1. A bicycle control system comprising:
a sensed element configured to be mounted to a first part of a bicycle;
a sensor configured to be mounted to a second part of the bicycle at a location to selectively detect the sensed element and send an output signal as the sensor detects the sensed element; and
a cycle computer configured to be mounted to a part of bicycle with the cycle computer including a receiver arranged to receive the output signal from the sensor,
the sensor including a sensing element that outputs a detection signal upon detecting the sensed element, a processing unit that calculates relative behavior between the first and second parts based on a time interval of the detection signal from the sensing element, and a transmitter that transmits the output signal to the cycle computer based a calculation result of the processing unit.

2. The bicycle control system according to claim 1, wherein the transmitter of the sensor is configured to transmit the output signal wirelessly, and the cycle computer is configured to receive the output signal from the transmitter of the sensor wirelessly.

3. The bicycle control system according to claim 1 or 2, wherein the sensed element is a magnet.

4. The bicycle control system according to any one of claims 1 to 3, wherein the processing unit of the sensor calculates a wheel rotation period in response to the detection signal from the sensing element of the sensor when one of the first and second parts is a part of a wheel and the other of the first and second parts is a frame member; and the transmitter of the sensor transmits the wheel rotation period in response to receiving the wheel rotation period from the processing unit.

5. The bicycle control system according to claim 4, wherein the cycle computer includes a processing unit that calculates at least one of bicycle speed, travel distance and average speed in response to receiving the wheel rotation period.

6. The bicycle control system according to any one of claims 1 to 5, wherein the processing unit of the sensor calculates a crank rotation period in response to the detection signal from the sensing element of the sensor when one of the first and second parts is a bicycle crank and the other of the first and second parts is a frame member; and the transmitter of the sensor transmits the crank rotation period in response to receiving the crank rotation period from the processing unit.

7. The bicycle control system according to claim 6, wherein the cycle computer includes a processing unit that calculates at least one of cadence and average cadence in response to receiving the crank rotation period.

8. A bicycle including the bicycle control system according to any one of claims 1 to 7, wherein the first part of the bicycle is a wheel, and the second part of the bicycle is at least one of a front fork and a chain stay.

9. A bicycle including the bicycle control system according to any one of claims 1 to 8, wherein the first part of the bicycle is a crank, and the second part of the bicycle is at least one of a seat tube, down tube and a chain stay.
